# EUROPEAN PATENT SPECIFICATION

(11) **EP 3 867 983 B1**
(45) Date of publication and mention of the grant of the patent: **25.09.2024**
(21) Application number: 19872671.3
(22) Date of filing: 16.10.2019
(51) Int. Cl.: H01R 31/06, H01R 13/703, H05B 45/00

(54) **WALL PLUG COMPRISING DIMMABLE SWITCHING MEANS, METHOD FOR OPERATING A WALL PLUG AND COMPUTER PROGRAM**
STECKDOSE MIT DIMMBAREN SCHALTMITTELN, VERFAHREN ZUM BETRIEB EINER STECKDOSE UND COMPUTERPROGRAMM
PRISE MURALE COMPRENANT DES MOYENS DE COMMUTATION À INTENSITÉ VARIABLE, MÉTHODE DE MISE EN OEUVRE D'UNE PRISE MURALE ET PROGRAMME D'ORDINATEUR

(30) Priority: 16.10.2018 SE 1851264
(43) Date of publication of application: 25.08.2021
(73) Proprietor: Plejd AB, 404 21 Göteborg (SE)
(72) Inventor: ESFAHANI, Babak, 412 63 Göteborg (SE); JOSEFSSON, Gustav, 413 20 Göteborg (SE); PÅSSE, Victor, 431 61 Mölndal (SE)
(74) Representative: Kransell & Wennborg KB
(86) International application number: PCT/SE2019/051019
(87) International publication number: WO 2020/081000

(56) References cited:
- EP-A1- 0 773 708
- EP-A1- 0 773 708
- WO-A1-02/063916
- GB-A- 2 443 904
- US-A1- 2014 091 730
- US-A1- 2014 101 346
- US-A1- 2015 057 825
- US-A1- 2015 057 825
- US-A1- 2018 115 192
- ANONYMOUS: "Nexa AD147 - Plug-in dimmer", 3 August 2018 (2018-08-03), pages 1 - 2, XP055795033, Retrieved from the Internet <URL:http://web.archive.org/web/20180803065317/http://www.nexa.se/vara-produkter/zwave/ad147-plug-in-dimmer> [retrieved on 20190424]

## Description

### TECHNICAL FIELD

The present invention generally relates to a wall plug being removably connectable to an electrical outlet, such as the mains. The invention also relates to a method for operating such a wall plug and to a thereto related computer program product.

### BACKGROUND OF THE INVENTION

In the past, sophisticated electronic control over complex systems has been limited primarily to industrial applications, and occasionally commercial applications. Such electronic control systems usually required extensive and costly equipment, as well as technically trained operators. However, with the increasing interest in so called Internet of Things (IoT), untrained people in home environments have been increasingly desirous of obtaining a sophisticated wirelessly controllable home automation system for enabling an easy to use control over such home products and systems.

Presently, such a home automation system may comprise a mix of fixed and removable units, connected to a central hub or individually controllable. Lighting is an area, at present, specifically suitable for home automation. For example, luminaries may be controlled to emit light at different levels (dimming), possibly in combination with different colors or different color temperatures.

The mentioned removable units may for example include so called wall plugs that may be removably connectable to an electrical outlet, i.e. the mains. Such wall plugs may for example be arranged in between the electrical outlet and a luminaire for turning on or off the luminaire or for dimming of the same. The end user must however ensure that the correct type of equipment is connected to the wall plug. That is, in case the wall plug is configured to allow dimming of a luminaire, connecting other equipment's such as a fan, a TV set or similar may have unpleasant consequences, possibly destroying the wall plug and/or the connected equipment.

With this in mind, it would be desirable to introduce a novel methodology for assist e.g. home users in general operation of wall plugs, for example adapted for use in relation to the above mentioned home automation system, focusing on a reduction in risk for connecting the "wrong type of equipment" to the discussed wall plugs.

Further attention is drawn to EP0773708A1, presenting an adaptor device for the connection of an electrical load to a power socket of a distribution network comprises a set of contacts for the connection to the socket, a set of contacts for the connection to a plug of the electrical load and, between the said contacts for the connection to the socket and the said contacts for the connection to a plug, a control circuit to control the power supplied to the said electrical load.

### SUMMARY OF THE INVENTION

According to an aspect of the invention, the above is at least partly met by a wall plug being removably connectable to an electrical outlet, wherein the wall plug comprises a device body comprising a housing with a front side and a back side, with protruding electrodes for insertion into a wall outlet, with said device body further comprising electrode receiving wells equivalent to a wall outlet, for electrical plug-in of an electrical appliance, detecting means for determining if the electrical appliance is plugged-in to the electrode receiving wells, switching means adapted to control power delivery to the electrical appliance at the electrode receiving wells, interface means, and a control unit connected to the detecting means, the switching means and the interface means, wherein the control unit is adapted to receive, using the detecting means, an indication that the electrical appliance is plugged-in to electrode receiving wells, receive, using the interface means, a first instruction defining if the electrical appliance is dimmable or non-dimmable, setting the switching means to be dimmable or non-dimmable based on the received instruction, setting the switching means to be non-dimmable if receiving an indication from the detecting means that the electrical appliance is unplugged from the electrode receiving wells.

By means of the present disclosure it may be possible to reduce the erroneous connection of a non-dimmable electrical appliance to a dimmer wall plug. That is, before the wall plug is arranged in the "dimmer mode", e.g. a user must (using the interface) indicate that the connected electrical appliance in fact is dimmable. In case the user indicates that the connected electrical appliance is non-dimmable, then the wall plug will function as a general "on-off" device, allowing regular control of the on-off state of the connected electrical appliance.

Within the concept of the present disclosure, it should be understood that the expression "dimmable" or "dimmer" should be interpreted broadly. That is, in line with the present disclosure a dimmable electrical appliance may for example be a luminaire comprising at least one of an incandescent/halogen light source, an LED light source or a fluorescent light source. That said, it may not necessarily be that the same type of dimmer technology may be used in relation to each and all of the listed types of light sources. Accordingly, in some embodiments it may be desirable to allow for the user to also input, using the interface, information relating to the type of electrical appliance connected to the wall plug. In addition, the present disclosure is not necessarily limited to dimming of light sources. That is, also some electrical motors may be "dimmed", i.e. where the speed (rpm) may be controlled. However, it should be understood that "normal" dimmer technology adapted for luminaires not necessarily may be used for speed control of the electric motor.

In addition to the above, by means of the present disclosure it is also possible to ensure that the dimmable/non-dimmable setting is only active as long as the electrical appliance is connected to the wall plug. That is, in case the electrical appliance is disconnected from the wall plug the user must once again provide an indication of the type of the electrical appliance subsequently connected to the wall plug. Thereby, unwanted errors are reduced in case not the same electrical appliance that was disconnected is reconnected.

In a possible embodiment of the present disclosure the detecting means may for example be implemented by means of a sensor adapted to detect when protruding electrodes of electrical appliance are inserted in the electrode receiving wells equivalent of the wall plug. Such a sensor may for example be adapted to detect the protruding electrodes of electrical appliance using mechanical, resistive or magnetic means.

Preferably, the switching means are arranged to comprise a solid state circuit arrangement. The solid state circuit arrangement may in turn comprise a solid state circuit and driver circuitry connected to the solid state circuit, wherein the control unit is adapted to control the driver circuitry to operate in one of a dimming mode and an on-off mode.

In an embodiment of the present disclosure the interface means comprises a user interface for allowing a user to provide the first instruction, for example implemented using a button, possibly provided at the device body of the wall plug.

In a preferred embodiment of the present disclosure, the interface means comprises a communication module arranged within the housing and adapted to communicate wirelessly using a first communications protocol with a first remote electronic device, wherein the first remote electronic device is adapted for providing the first instruction. Accordingly, e.g. the user may operate the first remote electronic device to wirelessly transmit a control signal to the wall plug, where the control signal comprises information indicative of if the electrical appliance is dimmable or non-dimmable. Thus, using a wireless interface it will not be needed to interact with e.g. the control button at the device body, simplifying user operation. However, it should be understood that the wireless communication in some embodiment of the present disclosure may be combined with inclusion of the button. The first communications protocol may for example be one of z-wave, Zigbee, Wi-Fi, Bluetooth and Bluetooth Low Energy. Any further presently or future communication protocols are possible and within the scope of the present disclosure.

In line with the present disclosure, the first remote electronic device may be at least one of a gateway and a user controllable electronic device, the user controllable electronic device being at least one of a mobile phone, a tablet, a desktop and a laptop. Accordingly, e.g. the user must not communicate directly with the wall plug using e.g. hos mobile phone, but the first instruction may for example be relayed from the mobile phone (and possibly processed) by e.g. a gateway to the wall plug.

In an alternative or additional embodiment, the communication module may be adapted to communicate wired or wirelessly using a second communications protocol with the electrical appliance, wherein the electrical appliance is adapted for providing the first instruction. That is, the electrical appliance may "itself' be arranged to communicate with the wall plug, for providing the wall plug with information about if the connected electrical appliance is dimmable or non-dimmable. For example, the electrical appliance connected to the wall plug may provide such information using the available electrical connection (i.e. mains wires) or wirelessly, such as for example using near field communication (NFC) once the electrical appliance is connected and close to the wall plug. Such NFC means of the electrical appliance could possibly be comprised with the electrical "plug" of the electrical appliance, thereby presenting it close to the wall plug.

In addition to the above, it may also and in line with the present disclosure be possible to further adapt the control unit to receive, using the communication module, a second instruction from the first electronic device, the second instruction a dimming level for the electrical appliance. Accordingly, e.g. the user may use his mobile phone or using the gateway (directly or e.g. by means of a predetermined schedule) control the dimming level of the electrical appliance.

Furthermore, in some embodiment of the present disclosure the wall plug may also comprise means for detecting if the wall plug is removed from the electrical outlet or if the electrical outlet is powerless, wherein the control unit if further adapted to maintain the setting of the switching means for a predetermined time period if the wall plug is detected to be removed from the electrical outlet or if the electrical outlet is detected to be powerless Accordingly, by means of such an implementation it is possible to ensure that the setting of the switching means is kept even in case of a short power failure, etc. Thus, in such an embodiment the wall plug may for example comprise energy storage means (such as a battery) for maintaining the setting for the predetermined time period. The predetermined time period may in turn be dependent on the implementation at hand, but may in some embodiments be e.g. at least 10 minutes to e.g. 24 hours. In case the predetermined time period is expired it is preferred that the switching means to be to be non-dimmable.

The wall plug as discussed above is preferably provided as a component of a wall plug assembly, further comprising an electrical appliance connected to the wall plug, and at least one of a gateway and a user controllable electronic device. As indicated above, the electrical appliance may advantageously comprise a light source.

According to another aspect of the present invention there is provided a method for operating a wall plug, the wall plug comprising a device body comprising a housing with a front side and a back side, with protruding electrodes for insertion into a wall outlet, with said device body further comprising electrode receiving wells equivalent to a wall outlet, for electrical plug-in of an electrical appliance, detecting means for determining if the electrical appliance is plugged-in to the electrode receiving wells, switching means adapted to control power delivery to the electrical appliance at the electrode receiving wells, interface means, and a control unit connected to the detecting means, the switching means and the interface means, wherein the method comprises the steps of receiving, using the detecting means, an indication that the electrical appliance is plugged-in to electrode receiving wells, receiving, using the interface means, an instruction defining if the electrical appliance is dimmable or non-dimmable, setting, using the control unit, the switching means to be dimmable or non-dimmable based on the received instruction, setting, using the control unit, the switching means to be non-dimmable if receiving an indication from the detecting means that the electrical appliance is unplugged from the electrode receiving wells. This aspect of the invention provides similar advantages as discussed above in relation to the previous aspect of the invention.

According to a still further aspect of the present invention there is provided a computer program product comprising a computer program product comprising a non-transitory computer readable medium having stored thereon computer program means for controlling a wall plug, the wall plug comprising a device body comprising a housing with a front side and a back side, with protruding electrodes for insertion into a wall outlet, with said device body further comprising electrode receiving wells equivalent to a wall outlet, for electrical plug-in of an electrical appliance, detecting means for determining if the electrical appliance is plugged-in to the electrode receiving wells, switching means adapted to control power delivery to the electrical appliance at the electrode receiving wells, interface means; and a control unit connected to the detecting means, the switching means and the interface means, wherein the computer program product comprises code for receiving, using the detecting means, an indication that the electrical appliance is plugged-in to electrode receiving wells, code for receiving, using the interface means, an instruction defining if the electrical appliance is dimmable or non-dimmable, code for setting, using the control unit, the switching means to be dimmable or non-dimmable based on the received instruction, code for setting, using the control unit, the switching means to be non-dimmable if receiving an indication from the detecting means that the electrical appliance is unplugged from the electrode receiving wells. Also this aspect of the invention provides similar advantages as discussed above in relation to the previous aspects of the invention.

A software executed by the server for operation in accordance to the invention may be stored on a computer readable medium, being any type of memory device, including one of a removable nonvolatile random access memory, a hard disk drive, a floppy disk, a CD-ROM, a DVD-ROM, a USB memory, an SD memory card, or a similar computer readable medium known in the art.

Further features of, and advantages with, the present invention will become apparent when studying the appended claims and the following description. The skilled addressee realize that different features of the present invention may be combined to create embodiments other than those described in the following, without departing from the scope of the present invention which is defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 conceptually illustrates a wall plug according to a currently preferred embodiment of the present disclosure,
Figs. 2a - 2c presents different a wall plug assemblies according to the present disclosure, and
Fig. 3 shows a flow chart of a method according to an embodiment of the present disclosure.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

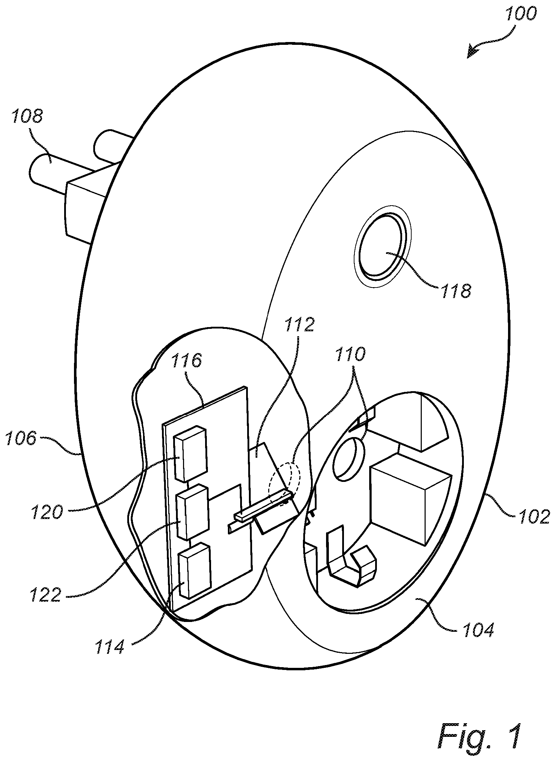

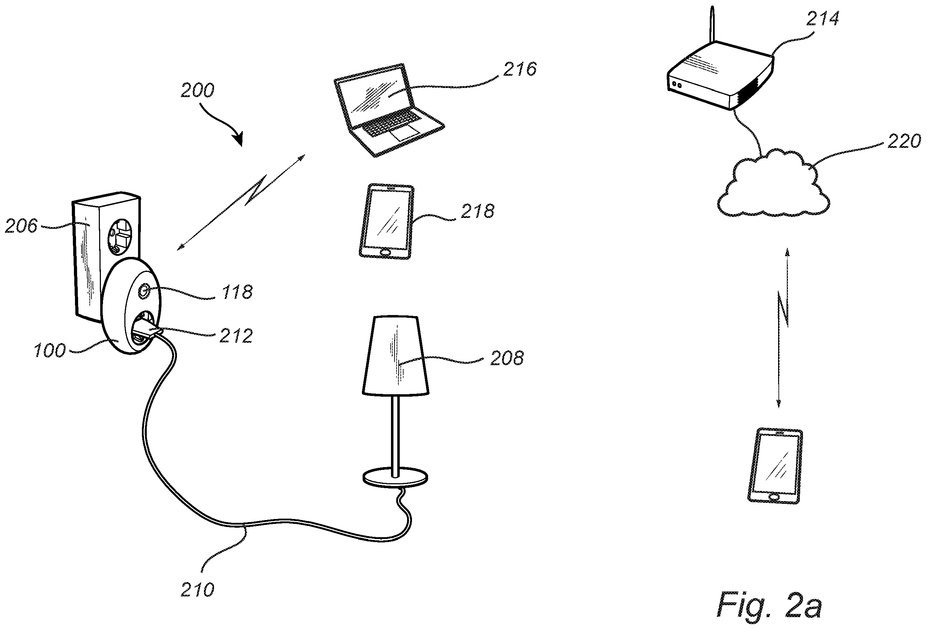

Referring now to the drawings and to Fig. 1 in particular, there is conceptually depicted a wall plug 100. In the illustration provided, the wall plug 100 comprises a device body in turn including a housing 102 with a front side 104 and a back side 106. The wall plug 100 additionally comprises protruding electrodes 108 for insertion into a wall outlet (as shown in Figs. 2a - 2c). The wall plug 100 further comprises electrode receiving wells 110 being equivalent to a wall outlet, where the electrode receiving wells 110 are adapted for receiving an electrical plug-in of an electrical appliance.

Furthermore, the wall plug 100 comprises detecting means for determining if the electrical appliance is plugged-in to the electrode receiving wells 110. In the exemplified embodiment as illustrated in Fig. 1, the detecting means is implemented using a micro-switch 112 that is arranged to be activated only once the plug-in of the electrical appliance is completely inserted in the electrode receiving wells 110. It should however be understood that other detecting means may be possible, including different mechanical means or sensors implementing magnetic or resistive detection of the plug-in of the electrical appliance.

The wall plug 100 also comprises switching means 114 adapted to control power delivery to the electrical appliance at the electrode receiving wells. The switching means 114 may in some embodiments be arranged at a printed circuit board (PCB) 116 arranged inside of the housing 102, where also the micro-switch 112 is arranged at the PCB 116. The switching means 114 may in some embodiment be implemented solid state circuit and driver circuitry connected to the solid state circuit.

The wall plug 100 further comprises an interface means, such as a button 118. However, in the illustrated embodiment the interface means also includes a communication module 120 arranged at the PCB 116. The communication module 120 is in the illustration presented in Fig. 1 adapted for wireless communication using a first communications protocol, such as for example one of z-wave, Zigbee, Wi-Fi, Bluetooth and Bluetooth Low Energy. The communication module 120 in turn comprises an antenna (not shown) for transmitting/receiving wireless communication signals.

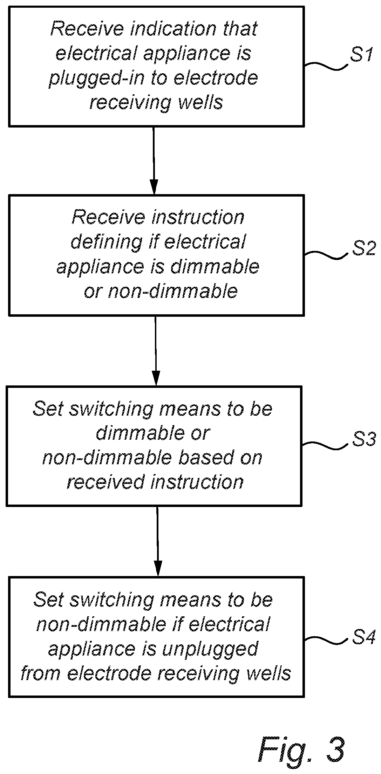

Furthermore, the wall plug 100 comprises a control unit 122 arranged at the PCB 116 and connected to the micro-switch 112, the switching means 114 and the interface means 118, 120. With further reference to Fig. 3, the control unit 122 is in turned programmed or adapted to receive, S 1, using the detecting means, an indication that the electrical appliance is plugged-in to electrode receiving wells 110. The control unit 122 is also arranged to receive, S2, using the interface means 118, 120, a first instruction defining if the electrical appliance is dimmable or non-dimmable. That is, a user may for example toggle the button 118 as an indication of the electrical appliance is dimmable or non-dimmable, or alternatively or also use a first remote device, as will be further discussed in relation to Figs. 2a - 2c, to provide a corresponding indication wirelessly to the wall plug 100.

Based on an analysis of the indication received from the interface means 118, 120, the control unit 122 will set, S3, control the switching means 114 to provide a dimming function or a non-dimming function. That is, in case the electrical appliance is non-dimmable then the switching means 114 will typically only provide an on-off functionality, i.e. the electrical appliance may only be turned on or off, without any dimming possible. However, in case the switching means 114 is arranged to provide the dimming function, then the electrical appliance for example comprising a dimmable light source.

In addition, the control unit 122 is also arranged to set, S4, the switching means 114 to be non-dimmable if an indication is received from the micro-switch 112 that the electrical appliance is unplugged from the electrode receiving wells 110. Accordingly, in case the electrical appliance is unplugged from the electrode receiving wells 110 then the wall plug 100 will "go back" to its default setting, where the switching means 114 are arranged to only provide the on-off functionality as discussed above.

The control unit 122 may include a microprocessor, microcontroller, programmable digital signal processor or another programmable device. The control unit 122 may also, or instead, each include an application specific integrated circuit, a programmable gate array or programmable array logic, a programmable logic device, or a digital signal processor. Where the control unit 122 includes a programmable device such as the microprocessor, microcontroller or programmable digital signal processor mentioned above, the processor may further include computer executable code that controls operation of the programmable device.

Turning now to Figs. 2a - 2c presenting different a wall plug assemblies 200, 202 and 204 according to the present disclosure. The wall plug assemblies 200, 202 and 204 are similar but the electrical appliances connected to the respective wall plug assemblies 200, 202 and 204 are different.

The illustrated wall plug assembly 200 as shown in Fig. 2a comprises the wall plug 100, where the wall plug 100 has been inserted in a wall outlet 206. The wall outlet 206 may typically provide an alternating voltage at 110 - 230 volts and a frequency between 50 - 60 Hz. Other ranges are of course possible and within the scope of the present disclosure.

In Fig. 2a, an electrical appliance in the form of a dimmable luminaire 208 has been electrically connected using an electrical cord 210 and an electrical plug 212 to the wall plug 100. In line with the discussion provided above, the button 118 and/or a gateway 214, a laptop 216, or a mobile phone 218 in conjunction with the communication module 120 may be used for provide an instruction to the wall plug 100 stating if the connected electrical appliance is dimmable or non-dimmable. In the present embodiment as shown in Fig. 2a, the luminaire 208 is dimmable and thus the information provided states that the connected electrical appliance is dimmable.

The gateway 214, the laptop 216, and/or the mobile phone 218 may in this case also be arranged to wirelessly transmit a second instruction to the wall plug 100, where the second instruction includes a dimming level, such as 0 - 100% emission of light, for the luminaire 208. The second instruction may also include information instructing the luminaire 208 to be turned off or completely turned on. The wall plug 100 may possibly comprise further manual interface means (not shown) at the housing for adjusting the dimming level for the luminaire 208.

It should be understood that the gateway 214 in turn may be connected to a separate network, such as the Internet 220. By means of such an implementation it may for example be possible to control e.g. the dimming level remotely, i.e. outside of the building where the wall plug 100 is arranged.

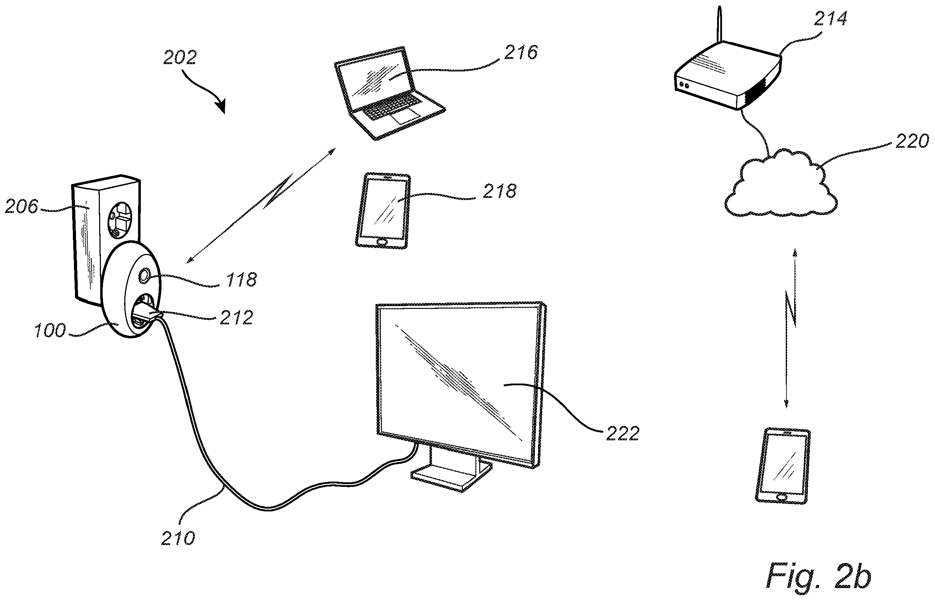

In an alternative embodiment as shown in Fig. 2b, showing wall plug assembly 204, the electrical appliance connected to the wall plug 100 is a television set 222. A TV set is generally not suitable for dimming. Rather, in case the TV 222 would be connected to a dimmer it is likely that the dimmer and/or the TV set 222 would be finally destroyed. However, in connecting the TV set 222 to the wall plug 100 e.g. the user will provide an instruction to the wall plug 100 that the connected electrical appliance is in fact a non-dimmable electrical appliance. As a result, the wall plug 100 may only be used for turning on or off the TV set 222.

In a possible embodiment of the present disclosure it may be possible to adapt a graphical user interface (GUI) of the mobile phone 218 to present questions to the user once an electrical appliance has been connected to the wall plug 100. That is, rather relying on if the user knows id the connected electrical appliance is dimmable or non-dimmable, the questions presented to the user using the GUI of the mobile phone 218 may be arranged to extract information such that the wall plug 100 is set to the correct setting corresponding to the connected electrical appliance. It could also or alternatively be possible to take a photo of the connected electrical appliance using the mobile phone 218 and apply image processing technology for determining the type of electrical appliance.

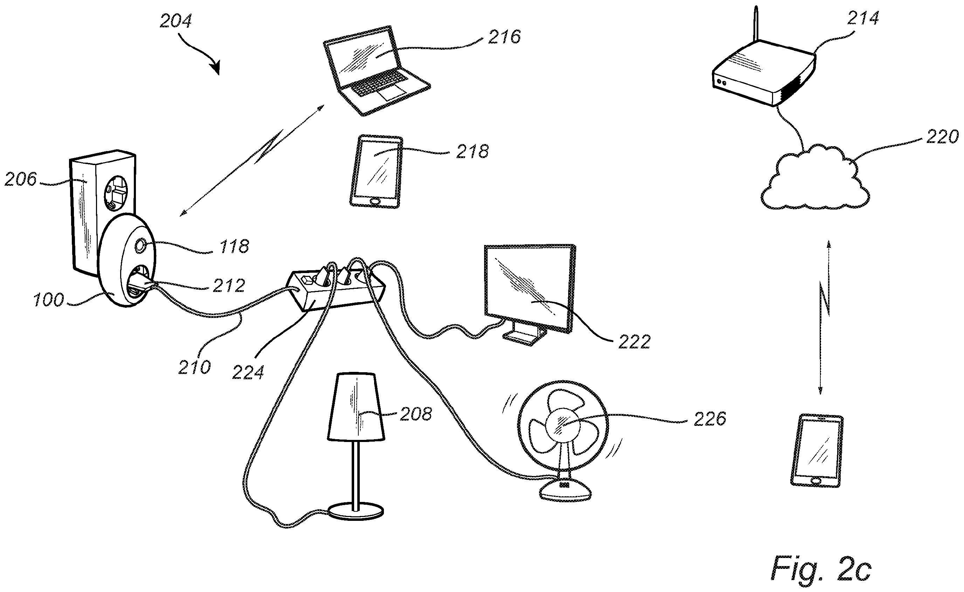

Turning now to Fig. 2c, presenting a still further example of a wall plug assembly 206. In this case the electrical appliance connected to the wall plug 100 is a power strip 224, allowing multiple electrical devices to be powered from a single electrical socket. Since the power strip 224 allows for the possibility of "bypassing" the functionality of the wall plug 100, where the switching means 114 are set to be non-dimmable if an indication is received from the micro-switch 112 is the electrical appliance is unplugged from the electrode receiving wells 110, then it is not suitable to arrange the wall plug 100 to allow for dimming to take place.

Specifically, the power strip 224 may for example allow for the luminaire 208, the non-dimmable TV set 222 and e.g. a non-dimmable fan 224 to be simultaneously connected. Thus, there is always a risk that non-dimmable electrical appliances are connected to the wall plug 100 through the power strip 224, possibly mixed with dimmable electrical appliances. Thus, in case a power strip 224 is connected to the wall plug 100 it is suitable to provide an instruction to the wall plug 100 to set the wall plug 100 to only provide the above discussed on-off functionality.

In summary, the present invention relates to a wall plug being removably connectable to an electrical outlet, wherein the wall plug comprises a device body comprising a housing with a front side and a back side, with protruding electrodes for insertion into a wall outlet, with said device body further comprising electrode receiving wells equivalent to a wall outlet, for electrical plug-in of an electrical appliance, detecting means for determining if the electrical appliance is plugged-in to the electrode receiving wells, switching means adapted to control power delivery to the electrical appliance at the electrode receiving wells, interface means, and a control unit connected to the detecting means, the switching means and the interface means, wherein the control unit is adapted to receive, using the detecting means, an indication that the electrical appliance is plugged-in to electrode receiving wells, receive, using the interface means, a first instruction defining if the electrical appliance is dimmable or non-dimmable, setting the switching means to be dimmable or non-dimmable based on the received instruction, setting the switching means to be non-dimmable if receiving an indication from the detecting means that the electrical appliance is unplugged from the electrode receiving wells.

By means of the present disclosure it may be possible to reduce the erroneous connection of a non-dimmable electrical appliance to a dimmer wall plug. That is, before the wall plug is arranged in the "dimmer mode", e.g. a user must (using the interface) indicate that the connected electrical appliance in fact is dimmable. In case the user indicates that the connected electrical appliance is non-dimmable, then the wall plug will function as a general "on-off" device, allowing regular control of the on-off state of the connected electrical appliance.

The control functionality of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures may show a sequence the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps. Additionally, even though the present disclosure has been described with reference to specific exemplifying embodiments thereof, many different alterations, modifications and the like will become apparent for those skilled in the art.

In addition, variations to the disclosed embodiments can be understood and effected by the skilled addressee in practicing the claimed present disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A wall plug (100) being removably connectable to an electrical outlet, wherein the wall plug comprises:
- a device body comprising a housing (102) with a front side (104) and a back side (106), with protruding electrodes (108) for insertion into a wall outlet (206), with said device body further comprising electrode receiving wells (110) equivalent to the wall outlet, for electrical plug-in of an electrical appliance (208, 222, 224);
- switching means (114) adapted to control power delivery to the electrical appliance at the electrode receiving wells;
- interface means (118); and
- a control unit (122) connected to the switching means and the interface means, **characterized in that** the wall plug further comprises detecting means (112) connected to the control unit and adapted for determining if the electrical appliance is plugged-in to the electrode receiving wells, and that the control unit is adapted to:
- receive, using the detecting means, an indication that the electrical appliance is plugged-in to electrode receiving wells;
- receive, using the interface means, a first instruction defining if the electrical appliance is dimmable or non-dimmable;
- setting the switching means to be dimmable or non-dimmable based on the received instruction; and
- setting the switching means to be non-dimmable if receiving an indication from the detecting means that the electrical appliance is unplugged from the electrode receiving wells.

2. The wall plug (100) according to claim 1, wherein the detecting means comprises a sensor (112) adapted to detect when protruding electrodes of electrical appliance are inserted in the electrode receiving wells equivalent of the wall plug.

3. The wall plug (100) according to claim 2, wherein the sensor detects the protruding electrodes of electrical appliance using mechanical, resistive or magnetic means.

4. The wall plug (100) according to any one of the preceding claims, wherein the switching means comprises a solid state circuit arrangement.

5. The wall plug (100) according to claim 4, wherein the solid state circuit arrangement comprises a solid state circuit and driver circuitry connected to the solid state circuit, wherein the control unit is adapted to control the driver circuitry to operate in one of a dimming mode and an on-off mode.

6. The wall plug (100) according to any one of the preceding claims, wherein the interface means comprises a user interface for allowing a user to provide the first instruction.

7. The wall plug (100) according to any one of the preceding claims, wherein the interface means comprises a communication module (120) arranged within the housing and adapted to communicate wirelessly using a first communications protocol with a first remote electronic device (214, 216, 218), wherein the first remote electronic device is adapted for providing the first instruction.

8. The wall plug (100) according to claim 7, wherein the first remote electronic device is at least one of a gateway (214) and a user controllable electronic device, the user controllable electronic device being at least one of a mobile phone (218), a tablet, a desktop, a laptop (216).

9. The wall plug (100) according to any one of 7 - 8, wherein the control unit is adapted to receive, using the communication module, a second instruction from the first electronic device, the second instruction a dimming level for the electrical appliance.

10. The wall plug (100) according to any one of claims 1 - 6, wherein the interface means comprises a communication module (120) arranged within the housing and adapted to communicate wired or wirelessly using a second communications protocol with the electrical appliance, wherein the electrical appliance is adapted for providing the first instruction.

11. The wall plug (100) according to any one of the preceding claims, further comprising means for detecting if the wall plug is removed from the electrical outlet or if the electrical outlet is powerless, wherein the control unit if further adapted to maintain the setting of the switching means for a predetermined time period if the wall plug is detected to be removed from the electrical outlet or if the electrical outlet is detected to be powerless.

12. A wall plug assembly (200, 202, 204), comprising:
- a wall plug (100) according to any one of claims 7-11,
- an electrical appliance (208, 222, 224) connected to the wall plug, and
- at least one of a gateway (214) and a user controllable electronic device (216, 218).

13. The wall plug assembly (200, 202, 204) according to claim 12, wherein the electrical appliance comprises a light source.

14. A method for operating a wall plug (100), the wall plug comprising:
- a device body comprising a housing (102) with a front side (104) and a back side (106), with protruding electrodes (108) for insertion into a wall outlet (206), with said device body further comprising electrode receiving wells (110) equivalent to the wall outlet, for electrical plug-in of an electrical appliance (208, 222, 224);
- switching means (114) adapted to control power delivery to the electrical appliance at the electrode receiving wells;
- interface means (118); and
- a control unit (122) connected to the switching means and the interface means, **characterized in that** the wall plug further comprises detecting means (112) connected to the control unit and adapted for determining if the electrical appliance is plugged-in to the electrode receiving wells, and that the method comprises the steps of:
- receiving, using the detecting means, an indication that the electrical appliance is plugged-in to electrode receiving wells;
- receiving, using the interface means, an instruction defining if the electrical appliance is dimmable or non-dimmable;
- setting, using the control unit, the switching means to be dimmable or non-dimmable based on the received instruction; and
- setting, using the control unit, the switching means to be non-dimmable if receiving an indication from the detecting means that the electrical appliance is unplugged from the electrode receiving wells.

15. A computer program product comprising a non-transitory computer readable medium having stored thereon computer program means for controlling a wall plug (100), the wall plug comprising:
- a device body comprising a housing (102) with a front side (104) and a back side (106), with protruding electrodes (108) for insertion into a wall outlet (206), with said device body further comprising electrode receiving wells (110) equivalent to the wall outlet, for electrical plug-in of an electrical appliance (208, 222, 224);
- switching means (114) adapted to control power delivery to the electrical appliance at the electrode receiving wells;
- interface means (118); and
- a control unit (122) connected to the detecting means, the switching means and the interface means,
**characterized in that** the wall plug further comprises detecting means (112) connected to the control unit and adapted for determining if the electrical appliance is plugged-in to the electrode receiving wells, and that the computer program product comprises:
- code for receiving, using the detecting means, an indication that the electrical appliance is plugged-in to electrode receiving wells;
- code for receiving, using the interface means, an instruction defining if the electrical appliance is dimmable or non-dimmable;
- code for setting, using the control unit, the switching means to be dimmable or non-dimmable based on the received instruction; and
- code for setting, using the control unit, the switching means to be non-dimmable if receiving an indication from the detecting means that the electrical appliance is unplugged from the electrode receiving wells.

## Patentansprüche

1. Wandstecker (100), der abnehmbar an eine Netzsteckdose anschließbar ist, wobei der Wandstecker umfasst:
- einen Vorrichtungskörper, der ein Gehäuse (102) mit einer Vorderseite (104) und einer Rückseite (106) mit vorstehenden Elektroden (108) zum Einsetzen in eine Wandsteckdose (206) umfasst, wobei der Vorrichtungskörper ferner Elektrodenaufnahmevertiefungen (110), die der Wandsteckdose entsprechen, zum elektrischen Einstecken eines Elektrogeräts (208, 222, 224) umfasst;
- Schaltmittel (114), die dazu geeignet sind, die Stromabgabe an das Elektrogerät an den Elektrodenaufnahmevertiefungen zu steuern;
- Schnittstellenmittel (118); und
- eine Steuereinheit (122), die an die Schaltmittel und die Schnittstellenmittel angeschlossen ist,
**dadurch gekennzeichnet, dass** der Wandstecker ferner Detektionsmittel (112) umfasst, die an die Steuereinheit angeschlossen sind und dazu geeignet sind zu bestimmen, ob das Elektrogerät in die Elektrodenaufnahmevertiefungen eingesteckt ist, und dass die Steuereinheit geeignet ist zum:
- Empfangen, unter Verwendung der Detektionsmittel, einer Angabe, dass das Elektrogerät in die Elektrodenaufnahmevertiefungen eingesteckt ist;
- Empfangen, unter Verwendung der Schnittstellenmittel, einer ersten Anweisung, die definiert, ob das Elektrogerät dimmbar oder nicht dimmbar ist;
- Einstellen der Schaltmittel, damit sie dimmbar oder nicht dimmbar sind, basierend auf der empfangenen Anweisung; und
- Einstellen der Schaltmittel, damit sie nicht dimmbar sind, falls eine Angabe von den Detektionsmitteln empfangen wird, dass das Elektrogerät aus den Elektrodenaufnahmevertiefungen ausgesteckt ist.

2. Wandstecker (100) nach Anspruch 1, wobei die Detektionsmittel einen Sensor (112) umfassen, der dazu geeignet ist zu detektieren, wenn die vorstehenden Elektroden des Elektrogeräts in die Elektrodenaufnahmevertiefungen, die dem Wandstecker entsprechen, eingesetzt sind.

3. Wandstecker (100) nach Anspruch 2, wobei der Sensor die vorstehenden Elektroden des Elektrogeräts unter Verwendung mechanischer, resistiver oder magnetischer Mittel detektiert.

4. Wandstecker (100) nach einem der vorhergehenden Ansprüche, wobei die Schaltmittel eine Festkörper-Schaltungsanordnung umfassen.

5. Wandstecker (100) nach Anspruch 4, wobei die Festkörper-Schaltungsanordnung eine Festkörper-Schaltung und Treiberschaltungen, die an die Festkörper-Schaltung angeschlossen sind, umfasst, wobei die Steuereinheit dazu geeignet ist, die Treiberschaltungen zu steuern, damit sie in einem von einem Dimm-Modus und einem Ein/Aus-Modus funktionieren.

6. Wandstecker (100) nach einem der vorhergehenden Ansprüche, wobei die Schnittstellenmittel eine Benutzerschnittstelle umfassen, um es einem Benutzer zu erlauben, die erste Anweisung bereitzustellen.

7. Wandstecker (100) nach einem der vorhergehenden Ansprüche, wobei die Schnittstellenmittel ein Kommunikationsmodul (120) umfassen, das im Innern des Gehäuses angeordnet und dazu geeignet ist, unter Verwendung eines ersten Kommunikationsprotokolls mit einer ersten entfernten elektronischen Vorrichtung (214, 216, 218) drahtlos zu kommunizieren, wobei die erste entfernte elektronische Vorrichtung dazu geeignet ist, die erste Anweisung bereitzustellen.

8. Wandstecker (100) nach Anspruch 7, wobei die erste entfernte elektronische Vorrichtung mindestens eines von einem Gateway (214) und einer benutzersteuerbaren elektronischen Vorrichtung ist, wobei die benutzersteuerbare elektronische Vorrichtung mindestens eines von einem Mobiltelefon (218), einem Tablet, einem Desktop-Computer oder einem Laptop-Computer (216) ist.

9. Wandstecker (100) nach einem der Ansprüche 7 bis 8, wobei die Steuereinheit dazu geeignet ist, unter Verwendung des Kommunikationsmoduls eine zweite Anweisung von der ersten elektronischen Vorrichtung zu empfangen, wobei die zweite Anweisung ein Dimm-Wert für das Elektrogerät ist.

10. Wandstecker (100) nach einem der Ansprüche 1 bis 6, wobei die Schnittstellenmittel ein Kommunikationsmodul (120) umfassen, das im Innern des Gehäuses angeordnet und dazu geeignet ist, unter Verwendung eines zweiten Kommunikationsprotokolls mit drahtgebunden oder drahtlos dem Elektrogerät zu kommunizieren, wobei das Elektrogerät dazu geeignet ist, die erste Anweisung bereitzustellen.

11. Wandstecker (100) nach einem der vorhergehenden Ansprüche, ferner umfassend Mittel zum Detektieren, ob der Wandstecker aus der Netzsteckdose genommen wurde, oder ob die Netzsteckdose stromlos ist, wobei die Steuereinheit ferner dazu geeignet ist, die Einstellung der Schaltmittel während eines vorbestimmten Zeitraums zu bewahren, falls detektiert wird, dass der Wandstecker aus der Netzsteckdose genommen wurde, oder falls detektiert wird, dass die Netzsteckdose stromlos ist.

12. Wandsteckerbaugruppe (200, 202, 204), umfassend:
- einen Wandstecker (100) nach einem der Ansprüche 7 bis 11,
- ein Elektrogerät (208, 222, 224), das an den Wandstecker angeschlossen ist, und
- mindestens eines von einem Gateway (214) und einer benutzersteuerbaren elektronischen Vorrichtung (216, 218).

13. Wandsteckerbaugruppe (200, 202, 204) nach Anspruch 12, wobei das Elektrogerät eine Lichtquelle umfasst.

14. Verfahren zum Betätigen eines Wandsteckers (100), wobei der Wandstecker umfasst:
- einen Vorrichtungskörper, der ein Gehäuse (102) mit einer Vorderseite (104) und einer Rückseite (106) mit vorstehenden Elektroden (108) zum Einsetzen in eine Wandsteckdose (206) umfasst, wobei der Vorrichtungskörper ferner Elektrodenaufnahmevertiefungen (110), die der Wandsteckdose entsprechen, zum elektrischen Einstecken eines Elektrogeräts (208, 222, 224) umfasst;
- Schaltmittel (114), die dazu geeignet sind, die Stromabgabe an das Elektrogerät an den Elektrodenaufnahmevertiefungen zu steuern;
- Schnittstellenmittel (118); und
- eine Steuereinheit (122), die an die Schaltmittel und die Schnittstellenmittel angeschlossen ist,
**dadurch gekennzeichnet, dass** der Wandstecker ferner Detektionsmittel (112) umfasst, die an die Steuereinheit angeschlossen und dazu geeignet sind zu bestimmen, ob das Elektrogerät in die Elektrodenaufnahmevertiefungen eingesteckt ist, und dass das Verfahren folgende Schritte umfasst:
- Empfangen, unter Verwendung der Detektionsmittel, einer Angabe, dass das Elektrogerät in die Elektrodenaufnahmevertiefungen eingesteckt ist;
- Empfangen, unter Verwendung der Schnittstellenmittel, einer ersten Anweisung, die definiert, ob das Elektrogerät dimmbar oder nicht dimmbar ist;
- Einstellen, unter Verwendung der Steuereinheit, der Schaltmittel, damit sie dimmbar oder nicht dimmbar sind, basierend auf der empfangenen Anweisung; und
- Einstellen, unter Verwendung der Steuereinheit, der Schaltmittel, damit sie nicht dimmbar sind, falls eine Angabe von den Detektionsmitteln empfangen wird, dass das Elektrogerät aus den Elektrodenaufnahmevertiefungen ausgesteckt ist.

15. Computerprogrammprodukt, umfassend ein nicht vorübergehendes computerlesbares Medium, auf dem Computerprogrammmittel gespeichert sind, um einen Wandstecker (100) zu steuern, wobei der Wandstecker umfasst:
- einen Vorrichtungskörper, der ein Gehäuse (102) mit einer Vorderseite (104) und einer Rückseite (106) mit vorstehenden Elektroden (108) zum Einsetzen in eine Wandsteckdose (206) umfasst, wobei der Vorrichtungskörper ferner Elektrodenaufnahmevertiefungen (110), die der Wandsteckdose entsprechen, zum elektrischen Einstecken eines Elektrogeräts (208, 222, 224) umfasst;
- Schaltmittel (114), die dazu geeignet sind, die Stromabgabe an das Elektrogerät an den Elektrodenaufnahmevertiefungen zu steuern;
- Schnittstellenmittel (118); und
- eine Steuereinheit (122), die an die Detektionsmittel, die Schaltmittel und die Schnittstellenmittel angeschlossen ist,
**dadurch gekennzeichnet, dass** der Wandstecker ferner Detektionsmittel (112) umfasst, die an die Steuereinheit angeschlossen und dazu geeignet sind zu bestimmen, ob das Elektrogerät in die Elektrodenaufnahmevertiefungen eingesteckt ist, und dass das Computerprogrammprodukt umfasst:
- Code zum Empfangen, unter Verwendung der Detektionsmittel, einer Angabe, dass das Elektrogerät in die Elektrodenaufnahmevertiefungen eingesteckt ist;
- Code zum Empfangen, unter Verwendung der Schnittstellenmittel, einer Anweisung, die definiert, ob das Elektrogerät dimmbar oder nicht dimmbar ist;
- Code zum Einstellen, unter Verwendung der Steuereinheit, der Schaltmittel, damit sie dimmbar oder nicht dimmbar sind, basierend auf der empfangenen Anweisung; und
- Code zum Einstellen, unter Verwendung der Steuereinheit, der Schaltmittel, damit sie nicht dimmbar sind, falls eine Angabe von den Detektionsmitteln empfangen wird, dass das Elektrogerät aus den Elektrodenaufnahmevertiefungen ausgesteckt ist.

## Revendications

1. Prise murale (100) pouvant être connectée de manière amovible à une prise électrique, la prise murale comprenant :
- un corps de dispositif comprenant un boîtier (102) avec une face avant (104) et une face arrière (106), avec des électrodes protubérantes (108) destinées à être insérées dans une prise murale (206), ledit corps de dispositif comprenant en outre des puits de réception d'électrodes (110) équivalents à la prise murale, pour le branchement électrique d'un appareil électrique (208, 222, 224)
- des moyens de commutation (114) adaptés pour contrôler la distribution d'énergie à l'appareil électrique au niveau des puits de réception d'électrodes ;
- des moyens d'interface (118) ; et
- une unité de commande (122) connectée aux moyens de commutation et aux moyens d'interface,
**caractérisée en ce que** la prise murale comprend en outre des moyens de détection (112) connectés à l'unité de commande et adaptés pour déterminer si l'appareil électrique est branché aux puits de réception d'électrodes, et **en ce que** l'unité de commande est adaptée pour :
- recevoir, à l'aide des moyens de détection, une indication que l'appareil électrique est branché sur des puits de réception d'électrodes ;
- recevoir, à l'aide des moyens d'interface, une première instruction définissant si l'appareil électrique est réglable en intensité ou non réglable en intensité ;
- régler les moyens de commutation pour être réglables en intensité ou non réglables en intensité sur la base de l'instruction reçue ; et
- régler les moyens de commutation pour être non réglable en intensités en cas de réception d'une indication des moyens de détection que l'appareil électrique est débranché des puits de réception d'électrodes.

2. Prise murale (100) selon la revendication 1, dans laquelle les moyens de détection comprennent un capteur (112) adapté pour détecter lorsque des électrodes protubérantes de l'appareil électrique sont insérées dans les puits de réception d'électrodes équivalents de la prise murale.

3. Prise murale (100) selon la revendication 2, dans laquelle le capteur détecte les électrodes protubérantes de l'appareil électrique à l'aide de moyens mécaniques, résistifs ou magnétiques.

4. Prise murale (100) selon une quelconque des revendications précédentes, dans laquelle le moyen de commutation comprend un agencement de circuit à semi-conducteurs.

5. Prise murale (100) selon la revendication 4, dans laquelle l'agencement de circuit à semi-conducteurs comprend un circuit à semi-conducteurs et un circuit de commande connecté au circuit à semi-conducteurs, dans laquelle l'unité de commande est conçue pour commander le circuit de commande pour fonctionner dans un d'un mode de gradation et d'un mode marche-arrêt.

6. Prise murale (100) selon une quelconque des revendications précédentes, dans laquelle le moyen d'interface comprend une interface d'utilisateur pour permettre à un utilisateur de fournir la première instruction.

7. Prise murale (100) selon une quelconque des revendications précédentes, dans laquelle le moyen d'interface comprend un module de communication (120) disposé à l'intérieur du boîtier et conçu pour communiquer sans fil à l'aide d'un premier protocole de communication avec un premier dispositif électronique distant (214, 216, 218), dans lequel le premier dispositif électronique distant est conçu pour fournir la première instruction.

8. Prise murale (100) selon la revendication 7, dans laquelle le premier dispositif électronique distant est au moins un parmi une passerelle (214) et un dispositif électronique contrôlable par l'utilisateur, le dispositif électronique contrôlable par l'utilisateur étant au moins un parmi un téléphone mobile (218), une tablette, un ordinateur de bureau, un ordinateur portable (216).

9. Prise murale (100) selon une quelconque des revendications 7 à 8, dans laquelle l'unité de commande est conçue pour recevoir, à l'aide du module de communication, une deuxième instruction provenant du premier dispositif électronique, la deuxième instruction étant un niveau de gradation pour l'appareil électrique.

10. Prise murale (100) selon une quelconque des revendications 1 à 6, dans laquelle les moyens d'interface comprennent un module de communication (120) disposé à l'intérieur du boîtier et conçu pour communiquer par fil ou sans fil à l'aide d'un deuxième protocole de communication avec l'appareil électrique, l'appareil électrique étant conçu pour fournir la première instruction.

11. Prise murale (100) selon une quelconque des revendications précédentes, comprenant en outre des moyens pour détecter si la prise murale est retirée de la prise électrique ou si la prise électrique est hors tension, l'unité de commande étant en outre adaptée pour maintenir le réglage des moyens de commutation pendant une période de temps prédéterminée si la prise murale est détectée comme étant retirée de la prise électrique ou si la prise électrique est détectée comme étant hors tension.

12. Ensemble de prise murale (200, 202, 204), comprenant :
- une prise murale (100) selon une quelconque des revendications 7-11,
- un appareil électrique (208, 222, 224) connecté à la prise murale, et
- au moins un d'une passerelle (214) et d'un dispositif électronique contrôlable par l'utilisateur (216, 218)

13. Ensemble de prise murale (200, 202, 204) selon la revendication 12, dans lequel l'appareil électrique comprend une source lumineuse.

14. Procédé de fonctionnement d'une prise murale (100), la prise murale comprenant :
- un corps de dispositif comprenant un boîtier (102) avec une face avant (104) et une face arrière (106), avec des électrodes protubérantes (108) destinées à être insérées dans une prise murale (206), ledit corps de dispositif comprenant en outre des puits de réception d'électrodes (110) équivalents à la prise murale, pour le branchement électrique d'un appareil électrique (208, 222, 224) ;
- des moyens de commutation (114) adaptés pour commander la distribution de puissance à l'appareil électrique au niveau des puits de réception d'électrodes ;
- des moyens d'interface (118) ; et
- une unité de commande (122) connectée aux moyens de commutation et aux moyens d'interface,
**caractérisée en ce que** la prise murale comprend en outre des moyens de détection (112) connectés à l'unité de commande et adaptés pour déterminer si l'appareil électrique est branché aux puits de réception d'électrodes, et **en ce que** le procédé comprend les étapes consistant à :
- recevoir, à l'aide des moyens de détection, une indication que l'appareil électrique est branché aux puits de réception d'électrodes ;
- recevoir, à l'aide des moyens d'interface, une instruction définissant si l'appareil électrique est à intensité variable ou non ;
- régler, à l'aide de l'unité de commande, les moyens de commutation pour être à intensité variable ou non en fonction de l'instruction reçue ; et
- régler, à l'aide de l'unité de commande, du moyen de commutation pour qu'il ne soit pas réglable en intensité s'il reçoit une indication du moyen de détection selon laquelle l'appareil électrique est débranché des puits de réception d'électrode.

15. Produit de programme informatique comprenant un support lisible par ordinateur non transitoire sur lequel sont mémorisés des moyens de programme informatique pour commander une prise murale (100), la prise murale comprenant :
- un corps de dispositif comprenant un boîtier (102) avec une face avant (104) et une face arrière (106), avec des électrodes protubérantes (108) destinées à être insérées dans une prise murale (206), ledit corps de dispositif comprenant en outre des puits de réception d'électrode (110) équivalents à la prise murale, pour le branchement électrique d'un appareil électrique (208, 222, 224) ;
- des moyens de commutation (114) adaptés pour commander la distribution d'énergie à l'appareil électrique au niveau des puits de réception d'électrode ;
- des moyens d'interface (118) ; et
- une unité de commande (122) connectée aux moyens de détection, aux moyens de commutation et aux moyens d'interface,
**caractérisé en ce que** la prise murale comprend en outre des moyens de détection (112) connectés à l'unité de commande et adaptés pour déterminer si l'appareil électrique est branché aux puits de réception d'électrode, et que le produit de programme informatique comprend :
- du code pour recevoir, à l'aide des moyens de détection, une indication que l'appareil électrique est branché aux puits de réception d'électrode ;
- du code pour recevoir, à l'aide des moyens d'interface, une instruction définissant si l'appareil électrique est réglable en intensité ou non réglable en intensité
- du code pour régler, à l'aide de l'unité de commande, les moyens de commutation pour être réglable en intensités ou non réglable en intensités sur la base de l'instruction reçue ; et
- du code pour régler, à l'aide de l'unité de commande, les moyens de commutation pour être non réglable en intensités en cas de réception d'une indication des moyens de détection que l'appareil électrique est débranché des puits de réception d'électrode.
